Europäisches Patentamt

European Patent Office

Office européen des brevets

(11) Veröffentlichungsnummer: **0 257 408**
**A1**

# (12) EUROPÄISCHE PATENTANMELDUNG

(21) Anmeldenummer: **87111442.7**

(22) Anmeldetag: **07.08.87**

(51) Int. Cl.4: **H04N 13/00** , H04N 3/14 ,
G02B 27/22

(30) Priorität: **21.08.86 DE 3628460**

(43) Veröffentlichungstag der Anmeldung:
**02.03.88 Patentblatt 88/09**

(84) Benannte Vertragsstaaten:
**BE DE FR NL**

(71) Anmelder: **DORNIER SYSTEM GmbH**
**Postfach 1360**
**D-7990 Friedrichshafen(DE)**

(72) Erfinder: **Becker, Joachim, Dr.**
**Brodmannstrasse 1/7**
**D-7997 Immenstaad(DE)**
Erfinder: **Schofield, Roy**
**Hasenweg 6**
**D-7997 Immenstaad(DE)**

(74) Vertreter: **Landsmann, Ralf, Dipl.-Ing.**
**DORNIER GMBH - Patentabteilung - Kleeweg 3**
**D-7990 Friedrichshafen 1(DE)**

(54) Vorrichtung zur hochauflösenden stereoskopischen Aufzeichnung von Bildern.

(57) Vorrichtung zur Aufzeichnung stereoskopischer Bilder, bei der alle zur Aufzeichnung nötigen Bestandteile in einem Rahmenbauteil untergebracht sind.

EP 0 257 408 A1

Vorrichtung zur hochauflösenden stereoskopischen Aufzeichnung von Bildern

Die Erfindung betrifft eine Vorrichtung zur stereoskopischen Aufzeichnung sich räumlich und zeitlich schnell ändernder Vorgänge.

Die Aufzeichnung von Stereobildern ist aus dem Bereich der Luftbildphotographie bekannt. Geräte für die Aufzeichnung sind Stand der Technik. Dazu gehören Stereokameras, Stereofilmkameras, Stereo-TV-Kameras und Stereomikroskope. Um mit TV-Kameras eine hohe geometrische und zeitliche Auflösung zu erhalten, müssen Zeilenkameras verwendet werden. Bei Zeilenkameras wird das betrachtete Objekt zeilenweise abgetastet und mit Hilfe eines Scanners/Choppers über die Kamerazeile(n) verschoben. Dabei ergibt sich die Schwierigkeit, daß die beiden im Parallelbetrieb arbeitenden Kameras geometrisch und zeitlich exakt aufeinander einjustiert sein müssen, um die stereoskopischen Bildpaare zu erhalten.

Der Erfindung liegt die Aufgabe zugrunde, eine Vorrichtung zu schaffen, die das Problem der Synchronisation des Zeilenscanners und der geometrischen Justage bei hochauflösend stereoskopisch aufzeichnenden Kameras vermeidet.

Die Aufgabe wird durch eine Vorrichtung nach Hauptanspruch und Unteransprüchen gelöst.

Zur Vermeidung von Kamerajustagefehlern, beispielsweise dem Kippen der optischen Achsen der Kameras zueinander, werden alle Teile der Aufnahmeeinrichtung, Optiken, Detektorzeilen und Scanmechanismus in einem Rahmenteil untergebracht. Dadurch lassen sich die Optiken und die Sensorzeilen sehr gut zueinander justieren. Die optischen Achsen der beiden Kameras verlaufen immer parallel. Im Rahmenteil ist ein Scanmechanismus für beide Kameras untergebracht. Durch die Verwendung nur einer Scanvorrichtung werden eventuell auftretende Fehler in ihrem Bewegungsablauf auf beide Kameras gleichzeitig übertragen und die Synchronisation bleibt vollständig erhalten. Als Scanmechanismus wird vorzugsweise ein einziges gemeinsam rotierendes Prisma mit einer Achse, und einem Antrieb verwendet, das die durch das Objektiv einfallenden Strahlen auf die Detektorzeilen der Kamera umlenkt. Außer Prismen können zur Ablenkung der einfallenden Lichtstrahlen auch Schwingspiegel, Drehspiegel oder andere Ablenkeinrichtungen verwendet werden. Die Zahl der Zeilen und deren Pixel kann dabei frei gewählt und die Bildfrequenz kann beliebig variiert werden. Gegenüber einer Röhrenkamera oder einer heute verfügbaren Array-Kamera wird von der Zeilenkamera eine höhere geometrische Auflösung erreicht, da von ihr mehr Pixel pro Zeile realisiert werden können.

Die Erfindung wird anhand von Figuren näher erläutert.

Es zeigen:

Figur 1 eine Seitenansicht im Schnitt mit ungebrochen durch das Prisma tretenden Lichtstrahlen,

Figur 2 die Seitensicht im im Schnitt mit abgelenkten Lichtstrahlen,

Figur 3 eine Draufsicht auf das erfindungsgemäße Bauteil.

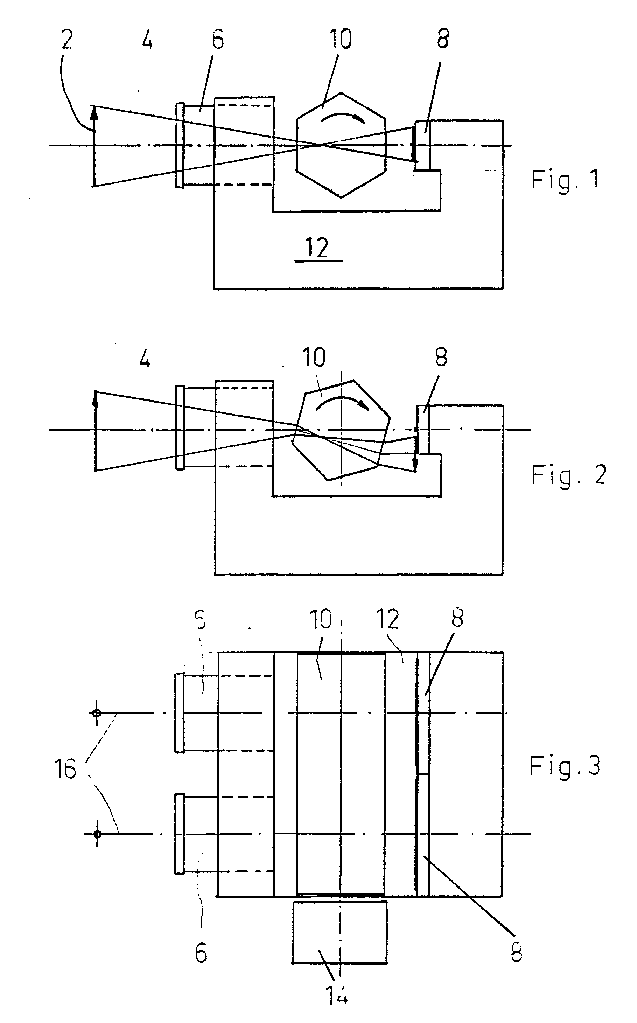

Figur 1 zeigt die vom Objekt 2 ausgehenden Lichtstrahlen 4, die durch das Objektiv 6 hindurchtreten und auf die Detektorzeile(n) 8 auftreffen. Sie werden im Prisma 10 nicht gebrochen. Objektiv 6 und Detektorzeilen 8 sind fest im Rahmenteil 12 befestigt, so daß eine optimale Justierung von Objektiv und Detektorzeilen gewährleistet ist.

Figur 2 zeigt die Vorrichtung mit einem verdrehten Prisma 10. Je nach Drehwinkel des Prismas 10 werden die sich an den Prismaflächen brechenden Lichtstrahlen 4 auf die Detektorzeile(n) 8 der Kamera umgelenkt. Durch den gemeinsamen Scann-/Choppmechanismus mit gemeinsamem Antrieb ist die Synchronisation der Bilder immer gegeben.

Figur 3 zeigt eine Draufsicht auf das Rahmenbauteil 12 mit den darin montierten Objektiven 6, dem Prisma 10 mit seinem Antrieb 14 und den Detektorzeilen 8.

**Ansprüche**

1. Vorrichtung zur geometrisch und/oder zeitlich hochauflösenden stereoskopischen Aufzeichnung von Bildern, **dadurch gekennzeichnet,** daß zwei Zeilenkameras, zwei Objektiven und nur eine Scanvorrichtung in einem Rahmenteil untergebracht sind.

2. Vorrichtung nach Anspruch 1, dadurch gekennzeichnet, daß als Scanvorrichtung ein einziges Prisma für beide Zeilenkameras vorhanden ist.

3. Vorrichtung nach Anspruch 1, dadurch gekennzeichnet, daß als Scanvorrichtung ein einziger Spiegel für beide Zeilenkameras vorhanden ist.

4. Vorrichtung nach einem der Ansprüche 1 bis 3, dadurch gegekennzeichnet, daß für die Scanvorrichtung nur ein Winkelspiegel vorgesehen ist.

Fig. 1

Fig. 2

Fig. 3

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| | **EINSCHLÄGIGE DOKUMENTE** | | EP 87111442.7 |
| Y | US - A - 4 562 463 (LIPTON)<br>* Fig. 7A *<br>-- | 1-4 | H 04 N 13/00<br>H 04 N 3/14<br>G 02 B 27/22 |
| Y | GB - A - 2 101 352 (BRITISH AEROSPACE)<br>* Fig. 1,2; Seite 1, Zeilen 73-92 *<br>-- | 1,2 | |
| Y | US - A - 3 708 666 (BARHYDT)<br>* Fig. 1; Spalte 2, Zeilen 34-43 *<br>-- | 1,2 | |
| Y | US - A - 3 808 435 (BATE)<br>* Fig. 2 *<br>-- | 3 | |
| Y | US - A - 3 889 117 (SHAW)<br>* Fig. 1,3 *<br>-- | 4 | RECHERCHIERTE SACHGEBIETE (Int. Cl. 4) |
| A | ELECTRONICS, 21. April 1982, New York<br>EUGENE F. RYBACZEWSKI "Virtual-phase structure simplifies clocking for CCD image sensor"<br>Seiten 141-144<br>* Seite 142, Fig. 2 *<br>-- | | H 04 N 3/00<br>H 04 N 5/00<br>H 04 N 9/00<br>H 04 N 13/00<br>G 02 B 27/00<br>G 03 B 35/00 |

Der vorliegende Recherchenbericht wurde für alle Patentansprüche erstellt.

| Recherchenort | Abschlußdatum der Recherche | Prüfer |
|---|---|---|
| WIEN | 10-11-1987 | BENISCHKA |

BAD ORIGINAL

## EINSCHLÄGIGE DOKUMENTE

EP 87111442.7

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | RADIOSCHAU, Heft 4, 1960, Wien <br><br> "Dreidimensionales Fernsehen", Seite 160 <br><br> * Foto auf Seite 160 * <br><br> ---- | | |

RECHERCHIERTE
SACHGEBIETE (Int Cl 4)

Der vorliegende Recherchenbericht wurde für alle Patentansprüche erstellt.

| Recherchenort | Abschlußdatum der Recherche | Prüfer |
|---|---|---|
| WIEN | 10-11-1987 | BENISCHKA |